# EUROPÄISCHE PATENTANMELDUNG

(11) **EP 3 620 261 A1**
(43) Veröffentlichungstag der Anmeldung: **11.03.2020**
(21) Anmeldenummer: 18193099.1
(22) Anmeldetag: 07.09.2018
(51) Int. Cl.: B23Q 1/70, B23Q 1/00, B23Q 1/54, B23Q 3/18, B23Q 16/00

(54) **SPINDELKOPF FÜR EINE WERKZEUGMASCHINE**

(71) Anmelder: Fischer AG Präzisionsspindeln, 3360 Herzogenbuchsee (CH)
(72) Erfinder: Tresch, Roger, 4313 Möhlin (CH)
(74) Vertreter: Hepp Wenger Ryffel AG

(57) **Zusammenfassung**

Die Erfindung betrifft einen Spindelkopf (1) für eine Werkzeugmaschine umfassend eine Gabel (2) mit zwei Gabelarmen (3, 3') und eine Spindeleinheit (4) mit einem Spindelgehäuse (5), einer im Spindelgehäuse (5) angeordneten Motorspindel (6) und zwei am Spindelgehäuse (5) angeordneten, bevorzugt hohlen Wellenstummeln (7, 7'), wobei die Spindeleinheit (4) um eine Drehachse (A) an den Gabelarmen (3, 3') drehbar gelagert ist. Erfindungsgemäss sind die Wellenstummel (7, 7') jeweils mit einer am Spindelgehäuse (5) befestigten Zentrierscheibe (8, 8') mit einer Zentrierfläche (9) koaxial zur Drehachse (A) ausgerichtet.

## Beschreibung

Die Erfindung betrifft einen Spindelkopf für eine Werkzeugmaschine nach dem Oberbegriff des unabhängigen Anspruchs.

Werkzeugmaschinen mit gattungsgemässen Spindelköpfen werden bei der spanenden Bearbeitung von Werkstücken verwendet und sind heutzutage als Mehrachsen-Werkzeugmaschinen ausgebildet, welche nebst der Bewegung des Spindelkopfes entlang der X-, Y- und Z-Achse auch eine Schwenkung des Spindelkopfes um eine Achse senkrecht zur Spindeldrehachse (A-Achse) sowie um eine weitere Achse (C-Achse) erlauben.

Bekannte Spindelköpfe umfassen in der Regel eine Gabel mit zwei Gabelarmen und eine Spindeleinheit. Die Spindeleinheit umfasst dabei ein Spindelgehäuse, eine im Spindelgehäuse angeordnete Motorspindel mit einer Spindeldrehachse und zwei am Spindelgehäuse angeordnete, hohle Wellenstummel, welche an einer Drehachse (A-Achse) der Spindeleinheit ausgerichtet sind. Die Spindeleinheit ist um die Drehachse (A-Achse) an den Gabelarmen drehbar gelagert.

Um eine sehr hohe Präzision bei der Bearbeitung zu gewährleisten, ist es wichtig, dass der Spindelkopf eine sehr hohe Steifigkeit aufweist. Bisher wurde dies, wie aus der DE 10 2008 051 613 bekannt, durch eine einstückige Ausbildung des Spindelgehäuse mit den Wellenstummeln gelöst.

Eine solche einstückige Ausbildung ist jedoch in vielerlei Hinsicht nachteilig. Entweder wird die Gabel mehrteilig ausgeführt, um den Zusammenbau zu vereinfachen, was wiederum im Hinblick auf die gewünschte Steifigkeit nachteilig ist, oder die Lagerung des Wellenstummels am Gabelarm muss so nah wie möglich am Spindelgehäuse erfolgen. Dies hat wiederum den Nachteil, dass der Einbau in die Gabel sehr aufwändig ist und die Lager schwer zugänglich sind. Bei einer Beschädigung eines Lagers oder einer Lagerstelle am Wellenstummel kann die Spindeleinheit nur mit einem sehr hohen Aufwand demontiert werden. Zudem muss bei Beschädigung einer Lagerstelle am Wellenstummel das ganze Spindelgehäuse ersetzt werden.

Demgegenüber wird eine mehrteilige Ausbildung des Spindelgehäuses mit den Wellenstummeln vorgeschlagen, um den Zusammenbau zu vereinfachen. Nachteilig ist hier, dass damit hohe Steifigkeitsverluste an den Verbindungsstellen der Bauteile auftreten. Zudem ist die Ausrichtung der Wellenstummel koaxial zur Drehachse (A-Achse) aufwändig.

Es ist daher Aufgabe der vorliegenden Erfindung, einen Spindelkopf anzugeben, welcher die Nachteile des Bekannten nicht aufweist und insbesondere durch eine hohe Steifigkeit wie bei bekannten, einstückigen Ausbildungen gekennzeichnet ist, jedoch aus mehreren, einfach anzufertigen Bauteilen zusammengesetzt ist, einfach zu bauen/unterhalten ist und eine sehr hohe Präzision der Drehachse (A-Achse) aufweist.

Die Aufgabe wird mit einem Spindelkopf nach dem Kennzeichen des unabhängigen Anspruchs gelöst.

Ein Spindelkopf umfasst dabei eine Gabel mit zwei Gabelarmen und eine Spindeleinheit. Die Spindeleinheit umfasst wiederum ein Spindelgehäuse, eine im Spindelgehäuse angeordnete Motorspindel und zwei am Spindelgehäuse angeordnete, bevorzugt hohle Wellenstummel, wobei die Spindeleinheit um eine Drehachse (A-Achse) an den Gabelarmen drehbar gelagert ist.

Erfindungsgemäss sind die die Wellenstummel jeweils mit einer am Spindelgehäuse befestigten Zentrierscheibe mit einer Zentrierfläche koaxial zur Drehachse (A-Achse) ausgerichtet.

Die Wellenstummel sind bevorzugt hohl ausgebildet, um Versorgungsleitungen für die Spindeleinheit durchführen zu können.

Die Wellenstummel werden dabei direkt am Spindelgehäuse befestig, z.B. angeschraubt. Dadurch wird zum einen erreicht, dass die Wellenstummel bei Bedarf entfernt und ggf. ausgetauscht werden können bzw. die Montage des Spindelkopfes erheblich vereinfacht werden kann. Zum anderen wird durch die direkte Verbindung zwischen Wellenstummel und Spindelgehäuse eine sehr hohe Steifigkeit der Konstruktion erreicht.

Die zur Drehachse (A-Achse) koaxiale Ausrichtung der beiden Wellenstummel wird durch die Zentrierscheibe sichergestellt.

Die Zentrierscheibe und der Wellenstummel sind derart aufeinander abgestimmt, dass durch Zusammenfügen des Wellenstummels und der Zentrierscheibe der Wellenstummel ausgerichtet wird.

Die Zentrierfläche der Zentrierscheibe wirkt dabei mit einer entsprechend geformten Zentrierfläche des Wellenstummels zusammen.

Die Zentrierwirkung der Zentrierfläche der Zentrierscheibe und/oder des Wellenstummels muss nicht zwangsläufig durch die gesamte Zentrierfläche erreicht werden. So kann z.B. vorgesehen werden, dass die Zentrierscheibe im Wesentlichen prismenförmig oder pyramidenstumpfförmig ausgebildet ist, wobei die Seitenkanten der als Zentrierfläche ausgebildeten Mantelfläche als Auflage für eine kreiszylindermantelförmige bzw. kegelstumpfmantelförmige Zentrierfläche des Wellenstummels dienen.

Umgekehrt kann der Wellenstummel einen prismenförmigen oder pyramidenstumpfförmigen Abschnitt aufweisen, welcher in eine entsprechend kreisrunde oder kegelstumpfförmige Aussparung der Zentrierscheibe eingesteckt wird.

Eine Ausbildung mit einer Zentrierscheibe vereinfacht die Ausrichtung der Wellenstummel erheblich. So kann z.B. eine Zentrierscheibe am Spindelgehäuse zunächst befestigt werden. Die andere Zentrierscheibe wird dann auf die bereits befestigte Zentrierscheibe ausgerichtet. So können dann beide Wellenstummel auf einfache Art und Weise koaxial ausgerichtet werden, indem diese mit dem Spindelgehäuse mitsamt den ausgerichteten Zentrierscheiben zusammengefügt werden.

Bevorzugt sind beide Zentrierscheiben im Wesentlichen identisch ausgebildet.

Bevorzugt weist die Zentrierfläche einen im Wesentlichen kreisrunden Querschnitt auf.

Der hier gemeinte Querschnitt der Zentrierfläche bezieht sich auf eine Querschnittebene senkrecht zur Drehachse (A-Achse).

Eine Zentrierfläche mit einem kreisrunden Querschnitt kann verhältnismässig einfach und mit sehr niedrigen Toleranzen, welche für die Ausrichtung der Wellenstummel massgebend sind, hergestellt werden. Zudem ist die Ausrichtung einer Zentrierscheibe mit einer solchen Zentrierfläche ebenfalls mit wenig Aufwand möglich. Z.B. wird die erste Zentrierscheibe am Spindelgehäuse befestigt und die zweite Zentrierscheibe dann ausgerichtet, indem das Spindelgehäuse um die als Referenzachse dienende Drehachse (A-Achse) gedreht wird und die zweite Zentrierscheibe mit einer Messuhr koaxial zur Zentrierfläche der ersten Zentrierscheibe positioniert und anschliessend mit dem Spindelgehäuse verbunden wird.

Bevorzugt ist die Zentrierfläche als Seitenfläche einer Bohrung der Zentrierscheibe ausgebildet, wobei zum Ausrichten der Wellenstummel eine zur Zentrierfläche komplementäre Wellenfläche aufweist und in die Bohrung eingesteckt ist. Die Bohrachse stimmt dabei bevorzugt mit der Drehachse (A-Achse) überein.

Die Bohrung ist dabei bevorzugt als zylindrische Bohrung ausgebildet, so dass die Zentrierfläche im Wesentlichen zylindermantelförmig ausgebildet ist. Entsprechend ist die als Zentrierfläche dienende Wellenfläche des Wellenstummels ebenfalls im Wesentlichen zylindermantelförmig ausgebildet.

Alternativ kann die Bohrung als konische Bohrung ausgeführt sein, so dass die Zentrierfläche im Wesentlichen kegelstumpfmantelförmig ausgebildet ist. Entsprechend ist die als Zentrierfläche dienende Wellenfläche des Wellenstummels ebenfalls im Wesentlichen kegelstumpfförmig ausgebildet.

Eine weitere bevorzugte Ausführungsform sieht vor, dass die Zentrierfläche als Aussenfläche der Zentrierscheibe ausgebildet ist, wobei zum Ausrichten der Wellenstummel eine zur Zentrierfläche komplementäre Bohrung aufweist und auf der Zentrierscheibe aufgesteckt ist. Die Aussenfläche ist dabei bevorzugt konzentrisch zur Drehachse (A-Achse) ausgebildet.

Die Zentrierfläche ist dabei bevorzugt im Wesentlichen zylindermantelförmig ausgebildet. Entsprechend ist die Bohrung des Wellenstummels als zylindrische Bohrung ausgebildet.

Alternativ kann die Zentrierfläche im Wesentlichen kegelstumpfmantelförmig ausgebildet. Entsprechend ist die Bohrung des Wellenstummels als konische Bohrung ausgebildet.

Bevorzugt weist jede Zentrierscheibe zwei plane und im Wesentlichen zueinander parallele Scheibenflächen auf. Die Scheibenflächen sind dabei bevorzugt senkrecht zur Drehachse (A-Achse) ausgebildet.

Das Spindelgehäuse weist bevorzugt zwei plane und im Wesentlichen zueinander parallele Auflagenflächen auf. Die Auflageflächen sind dabei bevorzugt senkrecht zur Drehachse (A-Achse) ausgebildet.

Dabei ist bevorzugt eine plane Scheibenfläche der Zentrierscheibe an einer der Auflageflächen des Spindelgehäuses aufgelegt.

Damit wird das Ausrichten der Zentrierscheiben erheblich vereinfacht, da die Zentrierscheiben durch die Parallelität der Scheibenflächen und der Auflageflächen des Spindelgehäuses zueinander parallel positioniert werden können und zum Ausrichten lediglich die Konzentrizität der Zentrierfläche zur Drehachse (A-Achse) erreicht werden muss.

Bevorzugt weisen die Wellenstummel und/oder die Zentrierscheiben einen Freistich auf.

Der Freistich ist dabei in einem Bereich angeordnet, in welchem der Wellenstummel und die Zentrierscheibe sich berühren. Bevorzugt ist der Freistich zwischen einer axialen und einer radialen Berührungsfläche der Zentrierscheibe und der Wellenstummels angeordnet.

Damit wird eine sehr hohe Steifigkeit der Verbindung zwischen Spindelgehäuse und Wellenstummel erreicht. Durch den Freistich wird bevorzugt eine Auflagefläche zwischen Wellenstummel und Spindelgehäuse bzw. Zentrierscheibe, welche sich senkrecht zur Drehachse (A-Achse) erstreckt, unterbrochen. Der Kraftfluss der Verbindungsmittel, beispielsweise Schrauben, zwischen Wellenstummel und Spindelgehäuse wird dabei optimiert. Eine Auflagefläche des Wellenstummels wird gegen die Scheibenfläche der Zentrierscheibe gepresst. Die Auflagefläche zwischen Wellenstummel und Spindelgehäuse wird dabei bevorzugt mit einem sehr grossen Durchmesser ausgeführt und ermöglicht somit das Erreichen einer sehr hohen Steifigkeit der Verbindungsstelle zwischen Wellenstummel und Spindelgehäuse. Die weiteren Bauteile wie beispielsweise Schrauben, Zentrierscheibe und die weitere, durch den Freistich unterbrochene Auflagefläche spielen bei der Ausbildung der Steifigkeit eine untergeordnete Rolle. Durch die Anordnung der Verbindungsmittel ist es zudem möglich, eine hohe Anzahl von Verbindungsmitteln, beispielsweise Schrauben, zu verwenden. Dadurch ist eine sehr hohe Vorspannkraft der Verbindung erreichbar, was mit einer einteiligen Konstruktion vergleichbare Steifigkeitswerten ermöglicht.

Bevorzugt ist die Zentrierscheibe mit einem Lochkreis zur Befestigung an das Spindelgehäuse versehen.

Ein Lochkreis ermöglicht eine einfache und trotzdem sehr genaue Möglichkeit der Verbindung zwischen Zentrierscheibe und Spindelgehäuse.

Die Zentrierscheibe wird bevorzugt mittels Stiften am Spindelgehäuse fixiert.

Die Zentrierscheibe wird dabei bevorzugt mit Schrauben am Spindelgehäuse spielbehaftet befestigt und ausgerichtet. Nach dem Ausrichten werden dann die Bohrungen für die Stifte, bevorzugt konisch, ausgeführt, fertig bearbeitet und danach die Stifte eingeschlagen. Damit wird ebenfalls eine sehr einfache Fixierung der Zentrierscheibe mit dem Spindelgehäuse erreicht.

Die Wellenstummel sind bevorzugt jeweils mittels eines Drehlagers am Gabelarm gelagert, wobei die Drehlager in einem dem Spindelgehäuse abgewandten Endbereich des Wellenstummels angeordnet sind.

Dadurch wird eine einfache Montage/Demontage des Spindelkopfes ermöglicht, da die Lager gut zugänglich sind und beispielsweise bei einem allfälligen Lagerschaden lediglich das betroffene Lager ausgetauscht werden kann, ohne dass der Spindelkopf aufwändig auseinandergebaut werden muss.

Die Erfindung wird nachfolgend anhand eines bevorzugten Ausführungsbeispiels in Verbindung mit den Figuren besser beschrieben. Es zeigen:
- Fig. 1: eine teilweise geschnittene Seitenansicht durch einen erfindungsgemässen Spindelkopf;
- Fig. 2: eine Detailansicht des Verbindungsbereichs zwischen Wellenstummel und Spindelgehäuse der Figur 1;
- Fig. 3: eine perspektivische Ansicht der Schnittdarstellung der Figur 1 ohne Wellenstummel und Befestigungsschrauben des Wellenstummels;
- Fig. 4: eine schematische Darstellung einer möglichen Ausbildung der Verbindung zwischen Wellenstummel und Spindelgehäuse;
- Fig. 5: eine weitere schematische Darstellung einer möglichen Ausbildung der Verbindung zwischen Wellenstummel und Spindelgehäuse; und
- Fig. 6: eine weitere schematische Darstellung einer möglichen Ausbildung der Verbindung zwischen Wellenstummel und Spindelgehäuse.

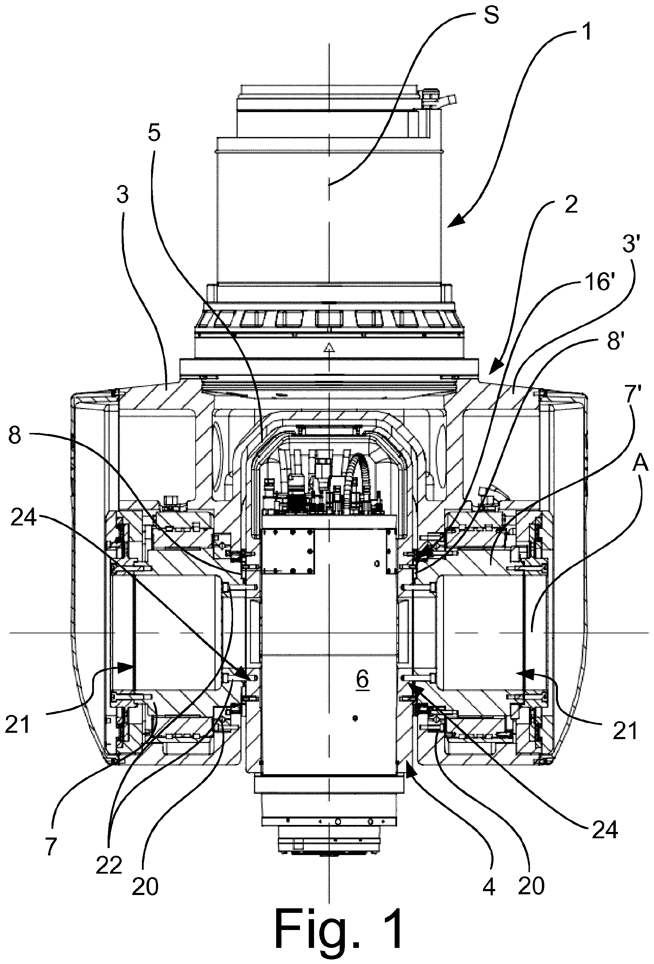

In der Figur 1 ist eine Schnittansicht durch einen erfindungsgemässen Spindelkopf 1 gezeigt. Die Schnittebene ist eine Ebene, welche durch eine Drehachse A (A-Achse) einer Spindeleinheit 4 sowie durch eine Spindeldrehachse S einer Motorspindel 6 aufgespannt wird.

Der Spindelkopf 1 umfasst eine Gabel 2 mit zwei Gabelarmen 3 und 3'. Zwischen den Gabelarmen 3 und 3' ist eine Spindeleinheit 4 angeordnet, welche die Motorspindel 6 umfasst, die in einem Spindelgehäuse 5 angeordnet ist. Zwei hohle Wellenstummel 7 und 7' sind beidseitig des Spindelgehäuses 5 koaxial zur Drehachse A der Spindeleinheit 4 am Spindelgehäuse 5 mit Befestigungsschrauben 22 befestigt.

Um die Wellenstummel 7 und 7' koaxial auszurichten, sind am Spindelgehäuse 5 zwei Zentrierscheiben 8 und 8' befestigt, welche gleich ausgebildet sind. Beide Zentrierscheiben 8 und 8' und die Wellenstummel 7 und 7' werden somit nachfolgend nur anhand der Zentrierscheibe 8 und des Wellenstummels 7 beschrieben. Die Beschreibung ist jedoch entsprechend auf die Zentrierscheibe 8' und den Wellenstummel 7' anwendbar.

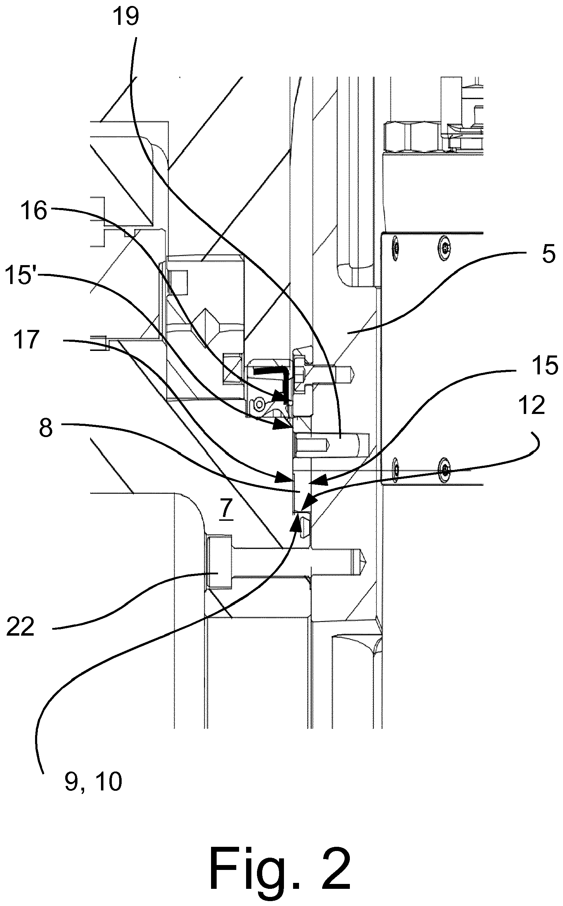

Die Zentrierscheibe 8 ist in der Detailansicht der Figur 2 besser sichtbar.

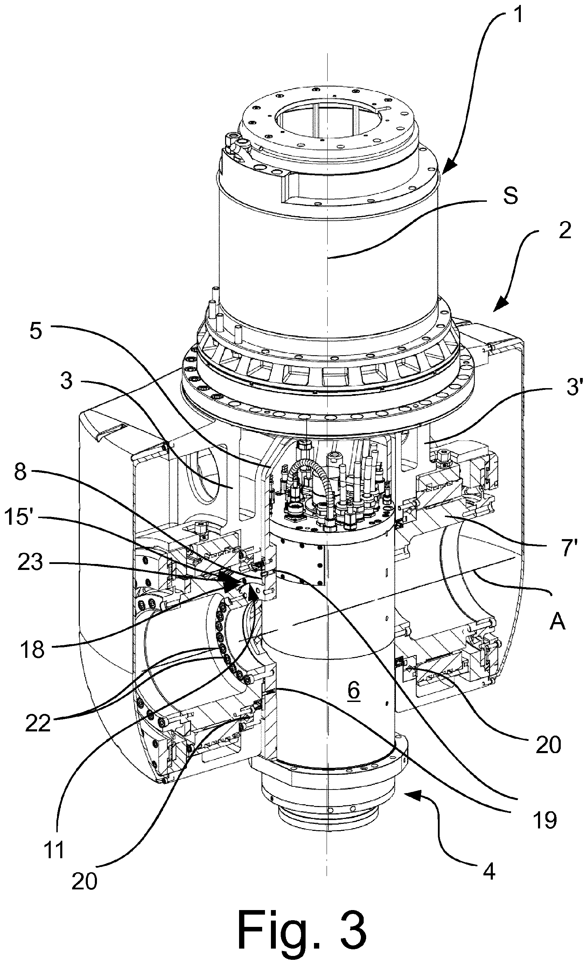

In der Figur 3 ist eine perspektivische Ansicht des Spindelkopfes 1 der Figur 1 gezeigt, wobei der Wellenstummel 7 sowie die Befestigungsschrauben 22 entfernt worden sind. Die Zentrierscheibe 8 ist nur teilweise sichtbar.

Die Zentrierscheibe 8 ist im Wesentlichen kreisringförmig ausgebildet und weist eine zentrale zylindrische Bohrung 11 auf. Eine Seitenfläche 10 der Bohrung 11, welche zylindermantelförmig ausgebildet ist, dient als Zentrierfläche 9 zur Ausrichtung des Wellenstummels 7 koaxial zur Drehachse A.

Das Spindelgehäuse 5 weist zwei zueinander parallele Auflageflächen, von denen lediglich die Auflagefläche 16 in der Figur 2 mit einem Bezugszeichen versehen ist. Entsprechend ist auf der gegenüberliegenden Seite des Spindelgehäuses eine Auflagefläche 16' ausgebildet.

Die Zentrierscheibe 8 weist zwei parallele und plane Scheibenflächen 15 und 15' auf. Eine Bohrachse der Bohrung 11 verläuft senkrecht zu den Scheibenflächen 15 und 15'.

Durch Auflegen der Scheibenfläche 15 der Zentrierscheibe 8 auf die Auflagefläche 16 des Spindelgehäuses 5 wird somit sichergestellt, dass die Zentrierfläche 9 senkrecht zur Auflagefläche 16 steht.

Die Zentrierscheibe 8 wird bevorzugt mit Befestigungsschrauben 22, von denen lediglich zwei Stück in der Figur 1 mit Bezugszeichen versehen sind, mit dem Spindelgehäuse 5 verbunden. Die Verbindung mittels Schrauben 23, welche entlang eines Lochkreises 18 angeordnet sind, erfolgt spielbehaftet, so dass die Zentrierscheibe 8 anschliessend koaxial zur Drehachse A ausgerichtet werden kann. Anders ausgedrückt wird die Bohrachse der Bohrung 11 der Zentrierscheibe 8 achsgleich zur Drehachse A ausgerichtet und die Zentrierscheibe 8 dann mit Stiften 19 fixiert. Entsprechend wird bezüglich der Zentrierscheibe 8' verfahren. Alternativ dazu kann die Zentrierscheibe 8 direkt am Spindelgehäuse 5 fixiert werden, wobei die Zentrierscheibe 8' dann mit der Zentrierscheibe 8 als Referenz ausgerichtet wird. Damit wird die Drehachse A definiert.

Der Wellenstummel 7 ist mit einer Wellenfläche 12 versehen, welche in die Bohrung 11 eingesteckt wird. Die Wellenfläche 12 des Wellenstummels 7 und die Zentrierfläche 9 sind derart aufeinander abgestimmt, dass eine genaue Passung erreicht wird. Somit wird beim Einstecken des Wellenstummels 7 in die Bohrung 11 der Zentrierscheibe 8 der Wellenstummel 7 koaxial zur Drehachse A ausgerichtet. Der Wellenstummel 7 wird anschliessend mittels der Befestigungsschrauben 22, die in die Gewindebohrungen 24 des Spindelgehäuses 5 eingeschraubt werden, mit dem Spindelgehäuse 5 fest verbunden. Der Übersicht halber sind lediglich zwei Gewindebohrungen 24 eines Lochkreises in der Figur 1 mit Bezugszeichen versehen.

Die Zentrierscheibe 8 ist am Übergang von der Zentrierfläche 9 zur Scheibenfläche 15' mit einem Freistich 17 versehen, um den Kraftfluss der Schraubverbindung derart zu gestalten, dass eine hohe Flächenpressung an der bezüglich der Drehachse A aussen gelegenen Fläche des Wellenstummels 7 zustande kommt, die an der Scheibenfläche 15' anliegt. Dadurch kann eine sehr hohe Steifigkeit der Verbindung zwischen Wellenstummel 7 und Spindelgehäuse 5 erreicht werden, die mit einteiligen Konstruktionen vergleichbar ist. Die Flächenpressung, welche an der Kontaktstelle zwischen der dem Spindelgehäuse zugewandten Endfläche des Wellenstummels 7 und der Auflagefläche 16 des Spindelgehäuses auftritt, spielt dabei eine im Verhältnis untergeordnete Rolle.

Die Wellenstummel 7 und 7' sind dann durch Wälzlager 20 in den Gabelarmen 3 und 3' gelagert, welche die Drehung der Spindeleinheit 4 um die Drehachse A ermöglichen.

Alternativ können die Wälzlager 20 in einem Endbereich 21 der Wellenstummel 7 und 7' angeordnet werden, welcher Endbereich 21 der Spindeleinheit 4 abgewandt ist. Damit sind die Wälzlager 20 besser zugänglich und können z.B. bei einem allfälligen Schaden besser ausgetauscht werden, ohne dass der Spindelkopf 1 aufwändig auseinandergebaut werden muss.

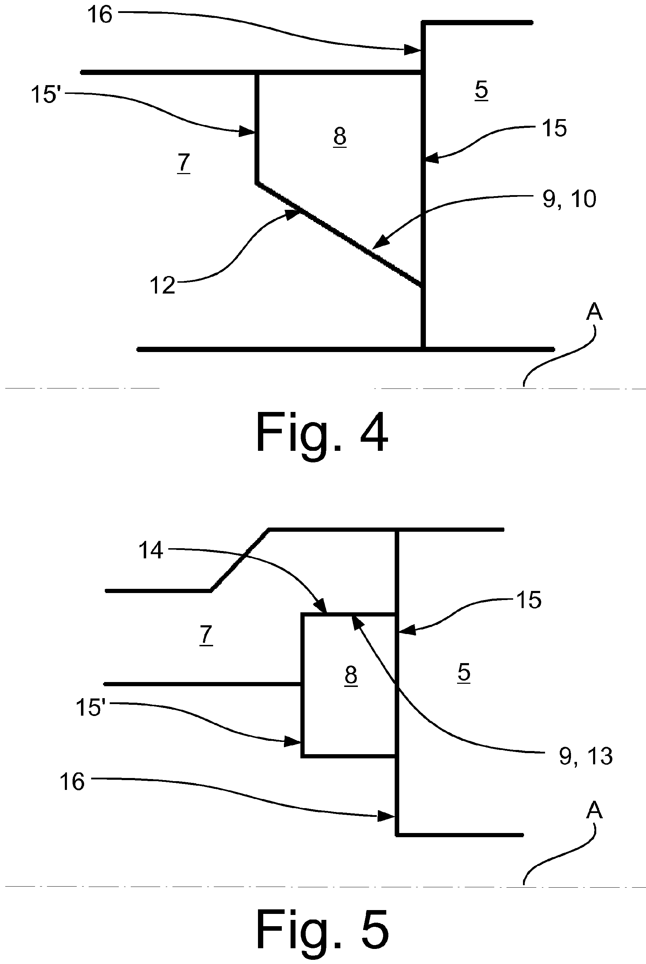

In der Figur 4 ist eine weitere Ausgestaltungsmöglichkeit einer Zentrierscheibe 8 und eines Wellenstummels 7 schematisch im Querschnitt, ähnlich der Figur 2, gezeigt. Auf die Darstellung von Details, Stiften 19, Befestigungsschrauben 22 und Schrauben 23 wurde der Übersicht halber verzichtet.

Die Zentrierscheibe 8 ist im Wesentlichen kreisringförmig ausgebildet und weist zwei parallele und plane Scheibenflächen 15 und 15' eine zentrale Bohrung 11 auf. Die Bohrung 11 ist in diesem Ausführungsbeispiel als konische Bohrung 11 ausgeführt. Die Seitenfläche 10 der Bohrung 11, welche als Zentrierfläche 9 dient, ist somit kegelstumpfmantelförmig ausgebildet. Entsprechend weist der Wellenstummel 7 eine kegelstumpfmantelförmige Wellenfläche 12 auf. Dadurch wird ein bezüglich der Drehachse A radiales Spiel zwischen Zentrierscheibe 8 und Wellenstummel 7 durch die Kegelform weitestgehend vermieden.

In der Figur 5 ist eine weitere Ausgestaltungsmöglichkeit einer Zentrierscheibe 8 und eines Wellenstummels 7 schematisch im Querschnitt, ähnlich der Figur 2, gezeigt. Auf die Darstellung von Details, Stiften 19, Befestigungsschrauben 22 und Schrauben 23 wurde der Übersicht halber verzichtet.

In der in der Figur 5 gezeigten Ausführungsform ist die Zentrierscheibe 8 im Wesentlichen kreisringförmig ausgebildet und weist zwei parallele und plane Scheibenflächen 15 und 15' auf. Die Zentrierfläche 9 ist als zylindermantelförmige Aussenfläche 13 der Zentrierscheibe 8 ausgebildet. Der Wellenstummel 7 weist dabei eine zylindrische Bohrung 14 auf. Zum Ausrichten des Wellenstummels 7 wird die mit dem Spindelgehäuse 5 fixierte und ausgerichtete Zentrierscheibe 8 in die Bohrung 14 eingesteckt. Die Aussenfläche der Bohrung 14 des Wellenstummels 7 und die Zentrierfläche 9 sind derart aufeinander abgestimmt, dass eine genaue Passung erreicht wird. Somit wird beim Einstecken der Zentrierscheibe 8 in die Bohrung 14 der Wellenstummel 7 koaxial zur Drehachse A ausgerichtet.

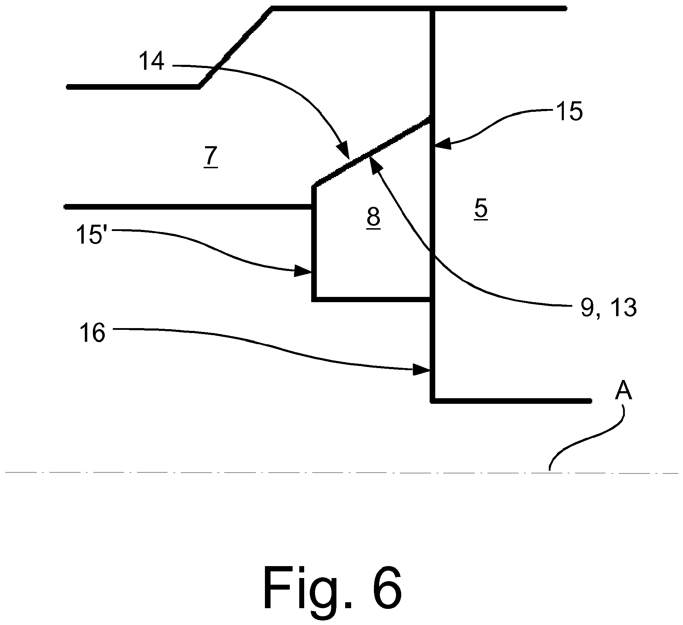

In der Figur 6 ist eine weitere Ausgestaltungsmöglichkeit einer Zentrierscheibe 8 und eines Wellenstummels 7 schematisch im Querschnitt, ähnlich der Figur 2, gezeigt. Auf die Darstellung von Details, Stiften 19, Befestigungsschrauben 22 und Schrauben 23 wurde der Übersicht halber verzichtet.

In der in der Figur 6 gezeigten Ausführungsform ist die Zentrierscheibe 8 im Wesentlichen kreisringförmig ausgebildet und weist zwei parallele und plane Scheibenflächen 15 und 15' auf. Die Zentrierfläche 9 ist als kegelstumpfmantelförmige Aussenfläche 13 der Zentrierscheibe 8 ausgebildet. Der Wellenstummel 7 weist dabei eine konische Bohrung 14 auf. Zum Ausrichten des Wellenstummels 7 wird die mit dem Spindelgehäuse 5 fixierte und ausgerichtete Zentrierscheibe 8 in die Bohrung 14 eingesteckt. Die Aussenfläche der Bohrung 14 des Wellenstummels 7 und die Zentrierfläche 9 sind derart aufeinander abgestimmt, dass eine genaue Passung erreicht wird. Somit wird beim Einstecken der Zentrierscheibe 8 in die Bohrung 14 der Wellenstummel 7 koaxial zur Drehachse A ausgerichtet. Zudem wird ein bezüglich der Drehachse A radiales Spiel zwischen Zentrierscheibe 8 und Wellenstummel 7 durch die Kegelform weitestgehend vermieden.

## Patentansprüche

1. Spindelkopf (1) für eine Werkzeugmaschine umfassend:
- eine Gabel (2) mit zwei Gabelarmen (3, 3');
- eine Spindeleinheit (4) mit einem Spindelgehäuse (5), einer im Spindelgehäuse (5) angeordneten Motorspindel (6) und zwei am Spindelgehäuse (5) angeordneten, bevorzugt hohlen Wellenstummeln (7, 7'), wobei die Spindeleinheit (4) um eine Drehachse (A) an den Gabelarmen (3, 3') drehbar gelagert ist;
**dadurch gekennzeichnet, dass** die Wellenstummel (7, 7') jeweils mit einer am Spindelgehäuse (5) befestigten Zentrierscheibe (8, 8') mit einer Zentrierfläche (9) koaxial zur Drehachse (A) ausgerichtet sind.

2. Spindelkopf (1) nach Anspruch 1, **dadurch gekennzeichnet, dass** die Zentrierfläche (9) einen im Wesentlichen kreisrunden Querschnitt aufweist.

3. Spindelkopf (1) nach Anspruch 1 oder 2, **dadurch gekennzeichnet, dass** die Zentrierfläche (9) als Seitenfläche (10) einer Bohrung (11) der Zentrierscheibe (8, 8') ausgebildet ist, wobei zum Ausrichten der Wellenstummel (7) eine zur Zentrierfläche (9) komplementäre Wellenfläche (12) aufweist und in die Bohrung (9) eingesteckt ist.

4. Spindelkopf (1) nach Anspruch 3, **dadurch gekennzeichnet, dass** die Zentrierfläche (9) im Wesentlichen zylindermantelförmig ausgebildet ist.

5. Spindelkopf (1) nach Anspruch 3, **dadurch gekennzeichnet, dass** die Zentrierfläche (9) im Wesentlichen kegelstumpfmantelförmig ausgebildet ist.

6. Spindelkopf (1) nach Anspruch 1 oder 2, **dadurch gekennzeichnet, dass** die Zentrierfläche (9) als Aussenfläche (13) der Zentrierscheibe (8, 8') ausgebildet ist, wobei zum Ausrichten der Wellenstummel (7) eine zur Zentrierfläche (9) komplementäre Bohrung (14) aufweist und auf der Zentrierscheibe (8, 8') aufgesteckt ist.

7. Spindelkopf (1) nach Anspruch 6, **dadurch gekennzeichnet, dass** die Zentrierfläche (9) im Wesentlichen zylindermantelförmig ausgebildet ist.

8. Spindelkopf (1) nach Anspruch 6, **dadurch gekennzeichnet, dass** die Zentrierfläche (9) im Wesentlichen kegelstumpfmantelförmig ausgebildet ist.

9. Spindelkopf (1) nach einem der vorhergehenden Ansprüche, **dadurch gekennzeichnet, dass** die Zentrierscheibe (8, 8') zwei plane und im Wesentlichen zueinander parallele Scheibenflächen (15, 15') aufweist.

10. Spindelkopf (1) nach einem der vorhergehenden Ansprüche, **dadurch gekennzeichnet, dass** das Spindelgehäuse (5) zwei plane und im Wesentlichen zueinander parallele Auflagenflächen (16, 16') aufweisen.

11. Spindelkopf (1) nach Anspruch 9 und 10, **dadurch gekennzeichnet, dass** eine Scheibenfläche (15, 15') der Zentrierscheibe (8, 8') an einer der Auflageflächen (16, 16') des Spindelgehäuses (5) aufgelegt ist.

12. Spindelkopf (1) nach einem der vorhergehenden Ansprüche, **dadurch gekennzeichnet, dass** die Wellenstummel (7, 7') und/oder die Zentrierscheiben (8, 8') einen Freistich (17) aufweisen.

13. Spindelkopf (1) nach einem der vorhergehenden Ansprüche, **dadurch gekennzeichnet, dass** die Zentrierscheibe (8, 8') mit einem Lochkreis (18) zur Befestigung an das Spindelgehäuse (5) versehen ist.

14. Spindelkopf (1) nach einem der vorhergehenden Ansprüche, **dadurch gekennzeichnet, dass** die Zentrierscheibe (8, 8') mittels Stiften (19) am Spindelgehäuse (5) fixiert ist.

15. Spindelkopf (1) nach einem der vorhergehenden Ansprüche, **dadurch gekennzeichnet, dass** die Wellenstummel (7, 7') jeweils mittels eines Drehlagers (20, 20') am Gabelarm (3, 3') gelagert sind, wobei die Drehlager (20, 20') in einem dem Spindelgehäuse (5) abgewandten Endbereich (21) des Wellenstummels (7, 7') angeordnet sind.
